# EUROPEAN PATENT SPECIFICATION

(11) **EP 1 706 643 B1**
(45) Date of publication and mention of the grant of the patent: **03.10.2007**
(21) Application number: 04701586.2
(22) Date of filing: 13.01.2004
(51) Int. Cl.: F04B 49/20, F04B 43/02, B01F 15/04

(54) **DOSING SYSTEM FOR DOSING OF A LIQUID ADDITIVE INTO A PRESSURIZED WATER SUPPLY LINE**
DOSIERSYSTEM ZUR DOSIERUNG EINES FLÜSSIGZUSATZES IN EINE DRUCKWASSERLEITUNG
SYSTEME DE DOSAGE PERMETTANT DE DOSER UN ADDITIVE LIQUIDE DANS UNE LIGNE D'ALIMENTATION D'EAU SOUS PRESSION

(43) Date of publication of application: 04.10.2006
(73) Proprietor: ECOLAB, INC., St. Paul, MN 55102-1390 (US)
(72) Inventor: RUPPERT, Andreas, 83355 Grabenstätt (DE); HEIDUCZEK, Ralf, 83483 Bischofswiesen (DE); LOHWIESER, Heribert, 83313 Siegsdorf (DE)
(74) Representative: Gesthuysen, Michael
(86) International application number: PCT/EP2004/000156
(87) International publication number: WO 2005/068836

(56) References cited:
- DE-A- 19 729 110
- GB-A- 1 595 254
- US-A- 2 894 732
- US-A- 5 570 743

## Description

The present invention is related to a dosing system for dosing of a liquid additive into a pressurized water supply line and in particular to a dosing system with the features of the pre-characterizing part of claim 1.

A pressurized water supply line like a normal tap water supply poses a problem when a liquid additive shall be introduced into the flow of water in the supply line. Sometimes, however, it is intended to have the mixture of liquid additive with the water to be directed to an outlet like a water tap. This is used in particular circumstances, e.g. in centralized or decentralized cleaning systems, or, and in particular, in centralized or decentralized disinfecting systems,

Introducing a liquid additive into water flowing in a pressurized water supply line is normally done with an injector-system following the principle of a water jet pump. In a jet pump a jet of water accelerated in an orifice entrains the liquid additive, i.e. sucks it from a liquid additive supply, to deliver it at elevated pressure to the outlet.

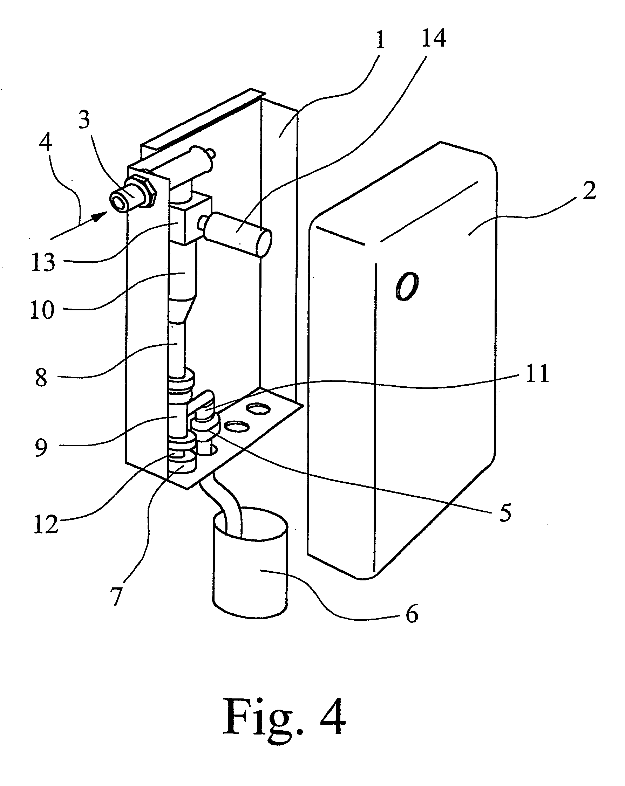

A dosing system with an injector for entraining a liquid additive into the pressurized water in the supply line is known from the prior art. Fig. 4 of the drawings shows such prior art system which is well known in practice (see technical handbook for "Topmater J 10" 05/95 published by Henkel Ecolab GmbH & Co. OHG, Düsseldorf, Germany). This prior art injector dosing system can be used as a decentralized system for automatic production of a ready to use solution of liquid additive in water. The first concentrated liquid additive from a liquid additive supply is injected into the flow of water in the supply line so that at the outlet the substantially and sufficiently weakened solution of liquid additive in water is present in a ready to use state. However, dosing systems with injector do not achieve a dosing accuracy sufficient for certain applications in particular in hospitals and other places where a precise concentration of the ready to use solution is mandatory. This is primarily due to the fact that the water pressure in a fresh water supply line varies as well as the flow characteristics of the water in the orifice. So it is virtually impossible to achieve a precisely proportional dosing of a liquid additive into a pressurized water supply line based on this principle.

A further problem with an injector system is the tendency of the injector to calcify with a resulting further decrease in accuracy.

Although above explained system is widely used, it sometimes is not accepted due to its accuracy-problems.

The accuracy of injector-systems has been addressed. Insofar reference is made to a multi-component dosing system known from the oil industry (US-A-5,570,743). Instead of an injector-system for entraining the liquid additive into the water flowing in the pressurized water supply line the dosing system according to the invention uses a motorized positive-displacement forcing pump to force the liquid additive into the flow of water. In operation of the system the control unit controls the flow rate of the liquid additive under pressure and into the product discharge line based on the amount required by the flow rate of water in the water supply line that is continuously monitored by the control unit. If sensors and control unit are properly calibrated a high dosing accuracy can be achieved by this positive displacement method. In particular a strictly proportional dosing of the liquid additive into the flow of water may be achieved so that the final concentration of liquid additive in the water leaving the system at the outlet to be used by the persons working with this system is highly stable over time.

The object of the present invention is to provide a dosing system that uses a motorized positive-displacement forcing pump to force the liquid additive into the flow of water with an improved steadiness of the flow rate of liquid additive.

The dosing system according to the invention solves above mentioned problem with the features according to claim 1.

Preferred improvements and embodiments of the dosing system according to the present invention are the subject matter of the dependent claims.

Of course, the motorized positive-displacement forcing pump as such usually delivers an at least slightly variable flow of liquid additive. However, in the product discharge line and a further line outside of the dosing system and attached to the product discharge connector the concentration of liquid additive in the water will equalize. The essential aspect of the invention is that the speed of the motorized positive-displacement forcing pump controlled by the control unit can closely follow any variations in water flow due to variations in water pressure in the water supply line.

In order to improve the steadyness of the flow rate of liquid additive delivered by the forcing pump it is proposed according to the invention that in operation of the system the control unit is operated to control the speed of the pump from a basic or nominal speed in the middle of a discharge stroke to a substantially higher end speed at or close to the beginning and/or the end of a discharge stroke. Details of this particular way to operate the forcing pump within the dosing system according to the invention may be obtained from a more detailed description below.

Whereas in general the dosing system according to the invention can be applied for all kinds of cleaning, washing, rinsing or disinfecting agents, a preferred field of application of such a dosing system is the application of disinfectants so that in a preferred form the liquid additive used in the dosing system is a disinfectant and preferably a liquid selected from the group of liquid disinfectants on the basis of formaldehyde or alcohol (see the publication by the Federal Ministry of Health in its official publication (Bundesgesundheitsblatt, Vol. 1/2003, pages 72 to 95 with the listing of accepted liquid disinfectants),

Whereas it is possible to use a liquid additive that is dispensed in water it is pref erable that the liquid additive is water-soluble.

Variations in the flow of liquid additive forced into the pressurized water supply line by the forcing pump can be reduced by using a double chamber pump with phase-shifted operation of the two chambers.

In general all kinds of positive-displacement forcing pumps may be used. In particular the forcing pump may be a piston-cylinder pump or a rotary-vane pump.

However, in those pumps there are sealing elements that are subject to substantial wear in operation, in particular if aggressive media are used as liquid additives. This is the case with many disinfectants. A preferred version of the dosing system, therefore, uses a diaphragm pump as the forcing pump and in particular a double chamber diaphragm pump.

For diaphragm pumps in general, in particular a dual diaphragm pump, reference is made to US-patent 5,358,385 (Wang) where the motor of this forcing pump is an electric motor with a gear transmission. However, other types of diaphragm pumps use a pneumatic or hydraulic system to motorize the positive-displacement forcing pump (EP 1 113 174 A2, EP 0 132 913 A1). From this prior art documents many details for diaphragm pumps can be obtained, e.g. suitable materials for the diaphragms themselves etc.

The use of a diaphragm pump, in particular a double chamber diaphragm pump is preferable in view of the fact that aggressive chemical substances can be handled without serious problems for sealing elements or the like.

Now, details and advantages of the invention are explained together with the explanation of a preferred embodiment of the invention with reference to the accompanying drawing. In the drawings shows
- Fig. 1: a schematic representation of a dosing system according to a preferred embodiment of the invention,
- Fig. 2: the theoretical and ideal course of the volume flow produced by a double-chamber diaphragm pump with 180° phase-shifted operation of the two chambers,
- Fig. 3: an improved course similar to Fig. 2, now with the speed of the pump controlled to increase towards beginning and end of each discharge stroke,
- Fig. 4: a schematic representation of an injector dosing system forming prior art.

The prior art dosing system is described again with reference to Fig. 4 of the drawings.

This dosing system is intended for dosing of a liquid additive into a pressurized water supply line. Fig. 4 shows a bottom part 1 of a housing and a cover 2 of the housing, here removed from the bottom part 1 to reveal the parts of the dosing system within the housing. This dosing system comprises a water tap connector 3 for connecting the dosing system to a pressurized water supply 4 indicated in general by an arrow. Further provided is a liquid additive connector 5 for connecting the dosing system to a liquid additive supply 6 indicated schematically in Fig. 4 as an exchangeable plastics container. Further provided is a product discharge connector 7 for discharging the pressurized mixture of liquid additive and water to at least one outlet, wherein this outlet can be the product discharge connector 7 as such or, preferably, an outlet tap or other armature connected to the product discharge connector 7 by a conduit or conduit-system.

Within the dosing system a water supply line 8 is leading from the tap connector 3 to a junction point 9 with a backflow preventer 10 therein. Such backflow preventer 10 prevents any flow of liquid backwards from the liquid additive connector 5 towards the water tap connector 3. In particular, the backflow preventer 10 prevents any flow of any liquid into the supply of water from any other than its intended source, namely the water supply 4. This is a safety mechanism necessary to keep any liquid additive out of the original water supply 4. Further, an additive supply line 11 is leading from the additive connector 5 to the junction point 9, and finally a product discharge line 12 is leading from the junction point 9 to the product discharge connector 7. A control element 13 in the form of a solenoid valve (magnet valve) within the water supply line 8 is positioned to control, in operation of the system, the flow of water in the water supply line 8 towards the junction point 9 by means of its on/off-function. Adjustment of the flow cross section in the control element 13 is possible manually by means of an adjustment element 14 attached to the control element 13.

In the prior art dosing system the junction point 9 is formed by an injector so that the liquid additive is entrained by suction from the liquid additive supply 6 into the flow of water through the injector/junction point 9, namely, from the water supply line 8 to the product discharge line 12 and towards the product discharge connector 7.

The above explained prior art dosing system has been discussed above in the introductory part of the description regarding its disadvantages. In particular accuracy of the system is questionable and clogging of the injector happens frequently.

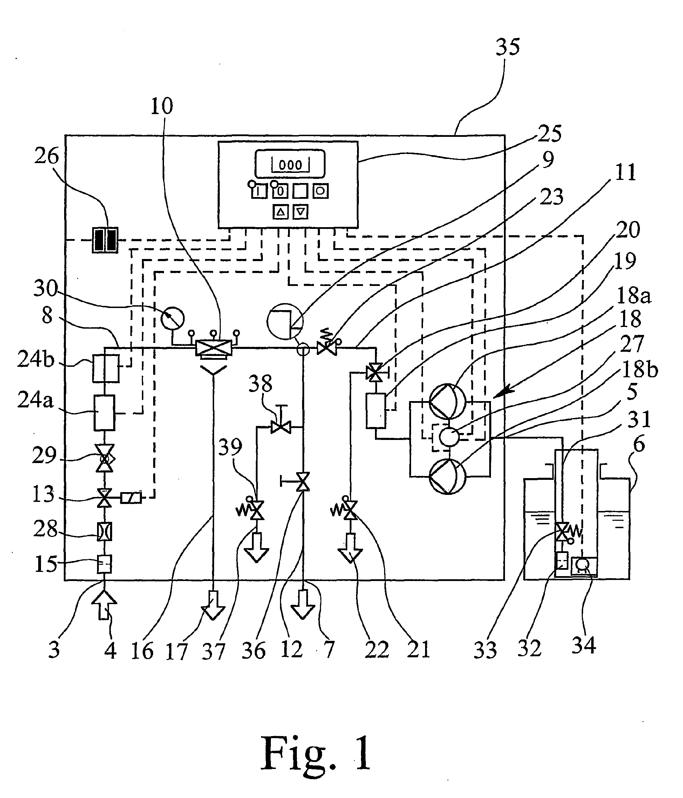

Now, Fig. 1 shows in a kind of block diagram a dosing system according to a preferred embodiment of the invention.

First of all; above explained parts of the dosing system that are provided similar to the prior art dosing system carry the same reference numbers and need no further explanation.

The block diagram of Fig. 1 shows a large number of additional items that are interesting to learn about but bear no specific relevance regarding the invention. First of all, just downstream of the water tap connector 3 is a filtering means 15. Below the backflow preventer 10 a spillover-collector 16 leads to a spillover drain 17.

Now, in the dosing system according to the invention a motorized positive-displacement forcing pump 18 is positioned within the additive supply line 11 upstream of the junction point 9. An additive flow meter 19 is positioned within the additive supply line 11 downstream of the pump 18. The additive flow meter 19 can be a mechanical flow meter like an oval wheel meter. However, other kinds of volume flow meters can be used as well.

In the present embodiment downstream of the additive flow meter 19 can be found a manual three way valve 20. The valve 20 is used to connect the additive supply line 11 to a nonreturn valve 21 and a calibration tap 22. In the calibration position of the three way valve 20 the liquid additive is pumped from the liquid additive supply 6 not into the junction point 9 but into the branch line from the valve 20 toward the calibration tap 22. In the normal operating position, however, the three way valve 20 is positioned to connect both sections of the additive supply line 11.

Finally, just upstream of the junction point 9 the additive supply line 11 shows a further nonreturn valve 23 to prevent backflow of water from the water supply line 8 into the additive supply line 11.

Within the water supply line 8 upstream of the backflow preventer 10 a water-flow meter 24 is used to check the volume flow of water in the water supply line 8. In fact, there two different types of water-flow meter 24 are used, namely a usual incremental water meter 24a and a mechanical flow meter 24b as a backup control element.

An electronic control unit 25 is provided and the flow meters 19, 24a, 24b as well as the pump 18 and, here, the control element 13 are connected to the control unit 25. A safety transformer 26 (230 V / 24 V) connects the system with mains in this specific embodiment.

In operation of the system the control unit 25 controls the flow rate of the additive to the amount required by the flow rate of the water in the water supply line 8 as measured by the water-flow meters 24a, 24b by controlling the operation of the pump 18, namely the operating speed of the pump 18 according to the values as measured by the additive flow meter 19. With this system it is possible to achieve a highly accurate dosing of liquid additive from the liquid additive supply 6 into the water as flowing in the water supply line 8 towards the product discharge outlet. In particular it is possible that in operation of the system this system achieves a reasonably proportional dosing of liquid additive into the flow of water.

As explained above a preferred application of the dosing system according to the invention is for a disinfectant as a liquid additive. In particular in hospitals or other places where accuracy is required for this kind of in-line production of a mixture of additive and water.

For disinfectants the liquid additive is preferably selected from a group comprising liquid disinfectants on the basis of formaldehyde or alcohol.

However, the dosing system according to the invention can be used for any kinds of liquid additives, e.g. for a cleaning agent, a washing agent, a rinsing agent or the like. For cleaning agents liquids on the basis of NaOH may be used as an example.

Whereas the pressurized mixture of additive and water may be a suspension of additive in water a preferred solution is to use a liquid additive that is water-soluble. Most of above mentioned examples are water-soluble liquid additives.

Now, as for the forcing pump 18, there are different possibilities for the driving motor 27. In the preferred embodiment the driving motor 27 of the pump 18 is an electric motor. In the preferred embodiment the operating speed (rpm) of the driving motor 27 is adjustable by the electronic control unit 25. However, as represented by prior art mentioned in the introductory part of the description, other kinds of driving motors can be used, e.g. pneumatic or hydraulic driving means. In such kind of motor an adjustable speed is more or less achieved by adjusting the clocking frequency of the pneumatic or hydraulic motor.

In general it is possible to use any kind of positive displacement pump. Therefore, the pump 18 may be constructed as a piston-cylinder pump or as a rotary-vane pump as already explained above. However, sometimes the liquid additive will be chemically aggressive. This is particularly true with disinfectant liquids as liquid additives. Chemically aggressive liquid additives will soon damage the sealing elements necessary in piston-cylinder or rotary-vane pumps. Therefore, in view of the particular field of application of the present invention, a diaphragm pump is a preferable choice for the forcing pump 18.

As explained above with reference to prior art documents diaphragm pumps are well known for all kinds of applications and in particular as positive-displacement forcing pumps.

Diaphragm pumps are well known in the prior art as single-action or double-action pumps. As a single action pump the pump 18 works with only one chamber. So alternating suction and discharge strokes are occurring. This leads to an intermittent delivery of liquid additive to the junction point 9.

An intermittent delivery of liquid additive to the junction point 9 means that the mixture of liquid additive and water flowing in the product discharge line 12 towards the product discharge connector 7 and the discharge outlet may have a very stable liquid additive concentration on the average that still shows a rather high fluctuation. This problem is partly solved if the pump 18 as a double-chamber pump with phase-shifted operation of the two chambers 18a, b.

Fig. 1 of the drawings indicates such a double-chamber pump 18 with two diaphragm/chamber-units 18a, 18b driven by one single driving motor 27. The driving motor 27 can have the form of an excenter-drive attached to plungers carrying the diaphragms of the two chambers by means of connecting rods. Other kinds of motor drives for double-chamber diaphragm pumps can be obtained from the prior art discussed above.

In the present embodiment the phase shift is 180°.

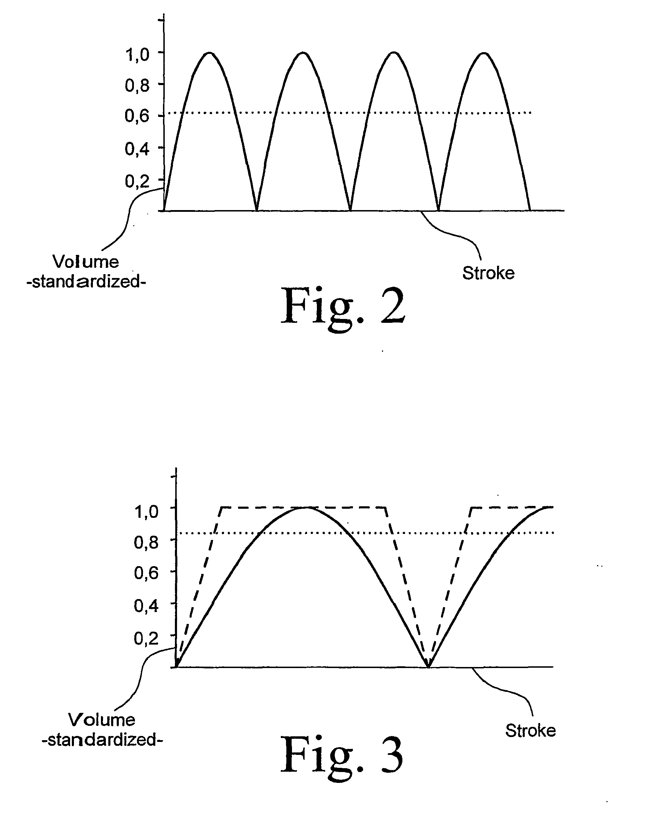

The result of the construction of the pump 18 as a double-chamber pump with two diaphragm-chambers can be obtained from Fig. 2 of the drawings. The suction stroke of one chamber is compensated by the discharge stroke of the other chamber. Each stroke is - ideally - considered a half sine wave. The gaps between the discharge strokes of one chamber are filled by the discharge strokes of the other chamber. The average standardized dosing volume is twice the dosing volume of a single stroke pump (average value as integral from the half sine waves as represented by the straight dotted line).

There is still a substantial fluctuation of liquid additive flow even with a double-chamber pump. This remaining fluctuation is further reduced by an additional aspect of the invention in that in operation of the system the control unit 25 is operated to control the speed of the forcing pump 18 from a basic or nominal speed in the middle of a discharge stroke to a substantially higher end speed at or close to the beginning and/or the end of a discharge stroke. As in operation of the system the dosing of a liquid additive from one pump chamber 18a, 18b approximally follows a half sine wave the end speed is reached at or close to the end points of the half sine wave.

In order to eliminate all fluctuations the pump speed would have to be infinitely increased. As this is obviously impossible the end speed will be limited to be specific value. This still eliminates most of the fluctuations. In the present embodiment shown in Fig. 3 in operation of the system the acceleration from the basic speed to the end speed is controlled by a factor y = 1/sin (x) where x is the stroke length of the forcing pump 18. The "accelerated" discharge stroke in indicated in dashed lines. Fig. 3 shows an end speed twice the basic or nominal speed. In practice the highest speed during the zero crossing may be much higher, namely a multiple of the basic or nominal speed.

In particular, the specific design of the forcing pump 18 as explained here leads to a convincing solution with high dosing accuracy unknown before for dosing systems like this.

The dosing system according to the invention has some further safety equipment that warrants further explanation.

First of all, in the present embodiment a water flow regulator 28 is positioned within the water supply line 8, preferably just downstream of the tap connector 3. Following the shut-off valve 13 the water supply line 18 further has a water pressure regulator 29. Water pressure regulator 29 is positioned within the water supply line 8 upstream of the backflow preventer 10 and restricts the maximum water pressure to a desired value. Of course the pressure regulator 29 is adjustable either manually (as here) or by the electronic control unit 25.

A water pressure gauge 30 is positioned at the water supply line 8, namely at the backflow preventer 10.

On the other side where the liquid additive supply 6 is positioned which here, as in the prior art, is provided in the form of an exchangeable container, the liquid additive supply 6 is connected to the liquid additive connector 5 by means of a suction lance 31. The suction lance 31 is provided with an intake filter 32, a nonreturn valve 33 and at least one liquid level sensor 34 which is connected to the control unit 25. In practice the suction lance 31 can be coupled to the liquid additive connector 5 and simultaneously the liquid level sensor 34 is coupled with the electronic control unit 25.

Finally, as Fig. 1 shows, it is desirable that a housing is provided enclosing the complete dosing system with the exception of the suction lance and associated control elements (if existing) so that the dosing system can be handled as a unit. In general it is possible to provide a compartment within the housing 35 to house the container as the liquid additive supply 6 within the housing 35, too. However, for ease of replacement of the container 6 an external position of the container 6 might be preferable.

The housing 35 can be placed wherever it is convenient, usually next to the water supply 4.

Finally, in the product discharge line 12 can be found a manual shut-off valve 36. From the product discharge line 12 branches off a water control line 37 with a shut-off valve 38 and a nonreturn valve 39. Thus it can be checked whether the flow of water from the water supply 4 reaches the product discharge line 12 before starting the pump 18 to add the liquid additive to the water flow.

The additive flow meter 19 forms a safety element that allows the control unit 25 to stop the system as soon as any defect at the pump 18, the suction lance 31, the driving motor 27 etc. is detected. The liquid level sensor 34 in the container 6 triggers a shut-off as well as soon as the lower safety level of liquid additive in the container 6 is reached. Of course, two levels may be used, one a the warning in the display of the control unit 25, the second for the off-signal to the control unit 25.

The backflow preventer 10 used in the present system may be constructed following the German statutes DIN 1988 and DIN EN 1717:2000.

## Claims

1. Dosing system for dosing of a liquid additive into a pressurized water supply line, wherein the liquid additive is preferably a water-soluble liquid additive, the system comprising:
a water tap connector (3) for connecting the dosing system to a pressurized water supply (4),
a liquid additive connector (5) for connecting the dosing system to a liquid additive supply (6),
a product discharge connector (7) for discharging the pressurized mixture of additive and water to at least one outlet,
a water supply line (8) leading from the tap connector (3) to a junction point (9) with a backflow preventer (10) therein,
an additive supply line (11) leading from the additive connector (5) to the junction point (9),
a product discharge line (12) leading from the junction point (9) to the product discharge connector (7), and
at least one control element (13) positioned to control, in operation of the system, the flow of water and/or liquid additive,
a motorized positive-displacement forcing pump (18) positioned within the additive supply line (11) upstream of the junction point (9),
an additive-flow meter (19) positioned within the additive supply line (11) preferably downstream of the pump (18),
a water-flow meter (24) positioned within the water supply line (8) preferably upstream of the backflow preventer (10),
an electronic control unit (25),
wherein the flow meters (19, 24) and the pump (18) and preferably at least one control element (13) are connected to the control unit (25) and in operation of the system the control unit (25) controls the flow rate of the additive to the amount required by the flow rate of water by controlling the operation of the pump (18), in particular the operating speed of the pump (18),
**characterized in that**
in operation of the system the control unit (25) is operated to control the speed of the pump (18) from a basic or nominal speed in the middle of a discharge stroke to a substantially higher end speed at or close to the beginning and/or the end of a discharge stroke.

2. Dosing system according to claim 1, **characterized in that**
in operation of the system the dosing of a liquid additive from one pump chamber (18a) approximately follows a half sine wave and the end speed is reached at or close to the end points of the half sine wave,

3. Dosing system according to claim 2, **characterized in that**
in operation of the system the acceleration from the basic speed to the end speed is controlled by a factor y = 1/sin(x) where x is the stroke length of the pump (18).

4. Dosing system according to any one of the preceding claims, **characterized in that**
in operation of the system the end speed is limited to at least twice or three times the basic or nominal speed.

5. Dosing system according to any one of the preceding claims, **characterized in that**
in operation of the system the dosing system achieves a proportional dosing of liquid additive into the flow of water.

6. Dosing system according to any one of the preceding claims, **characterized in that**
the liquid additive is a disinfectant,
wherein, preferably, the liquid additive is a liquid selected from the group of liquid disinfectants on the basis of formaldehyde or alcohol,or
the liquid additive is a cleaning agent,
wherein, preferably,
the liquid additive is a liquid on the basis ofNaOH.

7. Dosing system according to any one of the preceding claims, **characterized in that**
the driving motor (27) of the pump (18) is an electric motor with an adjustable speed, or
the driving motor (27) of the pump (18) is a hydraulic or pneumatic motor with an adjustable speed and/or clocking frequency.

8. Dosing system according to any one of the preceding claims, **characterized in that**
the pump (18) is a diaphragm pump, and/or
the pump (18) is a double-chamber pump with phase-shifted operation of the two chambers (18a, b), wherein, preferably, the phase-shift is about 180°.

9. Dosing system according to any one of the preceding claims, **characterized in that**
the control element (13) connected to the control unit (25) is a solenoid-operated shut-off valve within the water supply line (8) next to the tap connector (3), and/or
a water flow regulator (28) is positioned within the water supply line (8), preferably just downstream of the tap connector (3), and/or
a water pressure regulator (29) is positioned within the water supply line (8) upstream of the backflow preventer (10), and/or
a water pressure gauge (30) is positioned at or in the water supply line (8), preferably at or upstream of the backflow preventer (10).

10. Dosing system according to any one of the preceding claims, **characterized in that**
the liquid additive supply (6) is provided in the form of an exchangeable container,
wherein, preferably, in operation of the system the container forming the liquid additive supply (6) is connected to the liquid additive connector (5) by means of a suction lance (31),
wherein, further preferably, the suction lance (31) is provided with an intake filter (32) and/or a nonreturn valve (33) and/or at least one liquid level sensor (34) connected or connectible to the control unit (25).

11. Dosing system according to any one of the preceding claims, **characterized in that**
a housing (35) is provided enclosing the complete dosing system preferably with the exception of the suction lance (31) and associated control elements (34) (if existing) so that the dosing system can be handled as a unit.

## Patentansprüche

1. Dosiersystem zum Dosieren eines Flüssigadditivs in eine Druckwasserversorgungsleitung, wobei das Flüssigadditiv vorzugsweise ein wasserlösliches Flüssigadditiv ist, wobei das System Folgendes umfasst:
einen Wasserhahnverbinder (3) zur Verbindung des Dosiersystems mit einer Druckwasserversorgung (4), einen Flüssigadditivverbinder (5) zur Verbindung des Dosiersystems mit einer Flüssigadditivversorgung (6),
einen Produktaustragsverbinder (7) zum Austragen des druckbeaufschlagten Gemisches aus Additiv und Wasser zu mindestens einem Auslass,
eine Wasserversorgungsleitung (8), die vom Hahnverbinder (3) zu einer Verbindungsstelle (9) mit einer Rückflusssperre (10) darin führt,
eine Additivversorgungsleitung (11), die vom Additivverbinder (5) zur Verbindungsstelle (9) führt,
eine Produktaustragsleitung (12), die von der Verbindungsstelle (9) zum Produktaustragsverbinder (7) führt und
mindestens ein Steuerelement (13), das dazu angeordnet ist, im Betrieb des Systems den Wasser- und/oder Flüssigadditivfluss zu steuern,
eine motorisierte Verdränger-Druckpumpe (18), die in der Additivversorgungsleitung (11) stromaufwärts der Verbindungsstelle (9) positioniert ist,
einen Additivdurchflussmesser (19), der in der Additivversorgungsleitung (11), vorzugsweise stromabwärts der Pumpe (18), positioniert ist,
einen Wasserflussmesser (24), der in der Wasserversorgungsleitung (8), vorzugsweise stromaufwärts der Rückflusssperre (10), positioniert ist,
eine elektronische Steuereinheit (25),
wobei die Flussmesser (19, 24) und die Pumpe (18) und vorzugsweise mindestens ein Steuerelement (13) mit der Steuereinheit (25) verbunden sind und
die Steuereinheit (25) im Betrieb des Systems die Durchflussrate des Additivs auf die von der Durchflussrate des Wassers erforderte Menge steuert, indem sie den Betrieb der Pumpe (18), insbesondere die Betriebsdrehzahl der Pumpe (18), steuert,
**dadurch gekennzeichnet, dass**
die Steuereinheit (25) im Betrieb des Systems zur Steuerung der Drehzahl der Pumpe (18) von einer Basis- oder Nenndrehzahl in der Mitte eines Förderhubs auf eine wesentlich höhere Enddrehzahl am Beginn oder Ende oder nahe des Beginns und/oder Endes eines Förderhubs steuert.

2. Dosiersystem nach Anspruch 1, **dadurch gekennzeichnet, dass**
das Dosieren eines Flüssigadditivs im Betrieb des Systems von einer Pumpenkammer (18a) in etwa einer SinushaJ.bwelle folgt und die Enddrehzahl an oder nahe den Endpunkten der Sinushalbwelle erreicht wird.

3. Dosiersystem nach Anspruch 2, **dadurch gekennzeichnet, dass**
die Beschleunigung im Betrieb des Systems von der Basisdrehzahl zur Enddrehzahl durch einen Faktor y = 1/sin(x) gesteuert wird, wobei x die Hublänge der Pumpe (18) ist.

4. Dosiersystem nach einem der vorhergehenden Ansprüche, **dadurch gekennzeichnet, dass**
die Enddrehzahl im Betrieb des Systems auf mindestens das Zwei- oder Dreifache der Basis- oder Nenndrehzahl begrenzt wird.

5. Dosiersystem nach einem der vorhergehenden Ansprüche, **dadurch gekennzeichnet, dass**
das Dosiersystem im Betrieb des Systems eine proportionale Dosierung von Flüssigadditiv in den Wasserfluss erreicht.

6. Dosiersystem nach einem der vorhergehenden Ansprüche, **dadurch gekennzeichnet, dass**
das Flüssigadditiv ein Desinfektionsmittel ist,
wobei das Flüssigadditiv vorzugsweise eine aus der Gruppe aus flüssigen Desinfektionsmitteln auf Formaldehyd- oder Alkoholbasis ausgewählte Flüssigkeit ist, oder
das Flüssigadditiv ein Reinigungsmittel ist,
wobei das Flüssigadditiv vorzugsweise eine Flüssigkeit auf NaOH-Basis ist.

7. Dosiersystem nach einem der vorhergehenden Ansprüche, **dadurch gekennzeichnet, dass**
der Antriebsmotor (27) der Pumpe (18) ein Elektromotor mit einer verstellbaren Drehzahl ist oder
der Antriebsmotor (27) der Pumpe (18) ein Hydraulik- oder Druckluftmotor mit einer verstellbaren Drehzahl und/oder Taktfrequenz ist.

8. Dosiersystem nach einem der vorhergehenden Ansprüche, **dadurch gekennzeichnet, dass**
die Pumpe (18) eine Membranpumpe ist und/oder
die Pumpe (18) eine Doppelkammerpumpe mit einem phasenverschobenen Betrieb der beiden Kammern (18a, b) ist, wobei die Phasenverschiebung ca. 180° beträgt.

9. Dosiersystem nach einem der vorhergehenden Ansprüche, **dadurch gekennzeichnet, dass**
das mit der Steuereinheit (25) verbundene Steuerelement (13) ein elektromagnetisch betriebenes Sperrventil in der Wasserversorgungsleitung (8) neben dem Hahnverbinder (3) ist, und/oder
ein Wasserflussregler (28) in der Wasserversorgungsleitung (8), vorzugsweise knapp stromabwärts des Hahnverbinders (3) ist, und/oder
ein Wasserdruckregler (29) in der Wasserversorgungsleitung (8) stromaufwärts der Rückflusssperre (10) positioniert ist, und/oder
ein Wasserdruckmesser (30) an oder in der Wasserversorgungsleitung (8), vorzugsweise an oder stromaufwärts der Rückflusssperre (10), positioniert ist.

10. Dosiersystem nach einem der vorhergehenden Ansprüche, **dadurch gekennzeichnet, dass**
die Flüssigadditivversorgung (6) in Form eines austauschbaren Behälters vorgesehen ist,
wobei vorzugsweise im Betrieb des Systems der Behälter, der die Flüssigadditiversorgung (6) bildet, mittels einer Sauglanze (31) mit dem Flüssigadditivverbinder (5) verbunden ist,
wobei die Sauglanze (31) weiterhin vorzugsweise mit einem Einlassfilter (32) und/oder einem Rückschlagventil (33) und/oder mindestens einem Flüssigkeitspegelsensor (34), der mit der Steuereinheit (25) verbunden oder damit verbindbar ist, versehen ist.

11. Dosiersystem nach einem der vorhergehenden Ansprüche, **dadurch gekennzeichnet, dass**
ein Gehäuse (35) vorgesehen ist, das das komplette Dosiersystem vorzugsweise mit Ausnahme der Sauglanze (31) und zugehörigen Steuerelementen (34) (falls vorhanden) umschließt, so dass das Dosiersystem als eine Einheit gehandhabt werden kann.

## Revendications

1. Système de dosage destiné à doser un additif liquide dans une conduite d'alimentation en eau sous pression, l'additif liquide étant de préférence un additif liquide soluble dans l'eau, le système comportant :
un raccord (3) de robinet d'eau destiné à relier le système de dosage à une alimentation (4) en eau sous pression,
un raccord (5) d'additif liquide destiné à relier le système de dosage à une alimentation (6) en additif liquide,
un raccord (7) d'évacuation de produit destiné à évacuer le mélange sous pression d'additif et d'eau vers au moins une sortie,
une conduite (8) d'alimentation en eau allant du raccord (3) de robinet à un point (9) de jonction et comportant un dispositif anti-reflux (10),
une conduite (11) d'alimentation en additif liquide allant du raccord (5) d'additif au point (9) de jonction,
une conduite (12) d'évacuation de produit allant du point (9) de jonction au raccord (7) d'évacuation de produit, et
au moins un élément (13) de régulation positionné de façon à réguler, pendant le fonctionnement du système, le débit d'eau et / ou d'additif liquide,
une pompe foulante (18) volumétrique motorisée positionnée sur la conduite (11) d'alimentation en additif liquide en amont du point (9) de jonction,
un débitmètre (19) d'additif positionné sur la conduite (11) d'alimentation en additif liquide, de préférence en aval de la pompe (18),
un débitmètre (24) d'eau positionné sur la conduite (8) d'alimentation en eau, de préférence en amont du dispositif anti-reflux (10),
une unité (25) de commande électronique,
les débitmètres (19, 24), la pompe (18) et de préférence au moins un élément (13) de régulation étant reliés à l'unité (25) de commande et
pendant le fonctionnement du système, l'unité (25) de commande régulant le débit d'additif à la quantité rendue nécessaire par le débit d'eau en régulant le fonctionnement de la pompe (18) en particulier la vitesse de fonctionnement de la pompe (18),
**caractérisé en ce que**
pendant le fonctionnement du système, l'unité (25) de commande est exploitée pour réguler la vitesse de la pompe (18) d'une vitesse de base ou nominale au milieu d'une course de refoulement à une vitesse terminale sensiblement plus élevée au niveau ou à proximité du début et / ou de la fin d'une course de refoulement.

2. Système de dosage selon la revendication 1,
**caractérisé en ce que**
pendant le fonctionnement du système, le dosage d'un additif liquide provenant d'un compartiment (18a) de pompe suit approximativement une demi-sinusoïde et **en ce que** la vitesse terminale est atteinte au niveau ou à proximité des points d'extrémité de la demi-sinusoïde.

3. Système de dosage selon la revendication 2,
**caractérisé en ce que**
pendant le fonctionnement du système, l'accélération de la vitesse de base à la vitesse terminale est commandée par un facteur y = 1/sin(x) où x est la longueur de la course de la pompe (18).

4. Système de dosage selon l'une quelconque des revendications précédentes, **caractérisé en ce que**
pendant le fonctionnement du système, la vitesse terminale est limitée à au moins deux ou trois fois la vitesse de base ou nominale.

5. Système de dosage selon l'une quelconque des revendications précédentes, **caractérisé en ce que**
pendant le fonctionnement du système, le système de dosage réalise un dosage proportionnel d'additif liquide dans l'écoulement d'eau.

6. Système de dosage selon l'une quelconque des revendications précédentes, **caractérisé en ce que**
l'additif liquide est un désinfectant,
l'additif liquide étant de préférence un liquide choisi dans le groupe des désinfectants liquides à base de formaldéhyde ou d'alcool, ou
l'additif liquide étant un agent nettoyant,
l'additif liquide étant de préférence un liquide à base de NaOH.

7. Système de dosage selon l'une quelconque des revendications précédentes, **caractérisé en ce que**
le moteur (27) d'entraînement de la pompe (18) est un moteur électrique à vitesse réglable, ou
le moteur (27) d'entraînement de la pompe (18) est un moteur hydraulique ou pneumatique dont la vitesse et / ou la fréquence de chronométrage sont réglables.

8. Système de dosage selon l'une quelconque des revendications précédentes, **caractérisé en ce que**
la pompe (18) est une pompe à diaphragme, et / ou
la pompe (18) est une pompe à double compartiment avec fonctionnement déphasé des deux compartiments (18a, b), le déphasage étant de préférence d'environ 180°.

9. Système de dosage selon l'une quelconque des revendications précédentes, **caractérisé en ce que**
l'élément (13) de régulation relié à l'unité (25) de commande est une électrovanne de coupure sur la conduite (8) d'alimentation en eau près du raccord (3) de robinet et / ou
un régulateur (28) de débit d'eau est positionné sur la conduite (8) d'alimentation en eau, de préférence immédiatement en aval du raccord (3) de robinet, et / ou
un régulateur (29) de pression d'eau est positionné sur la conduite (8) d'alimentation en eau en amont du dispositif anti-reflux (10) et / ou
un manomètre (30) d'eau est positionné sur ou dans la conduite (8) d'alimentation en eau, de préférence au niveau ou en amont du dispositif anti-reflux (10).

10. Système de dosage selon l'une quelconque des revendications précédentes, **caractérisé en ce que**
l'alimentation (6) en additif liquide est assurée sous la forme d'un récipient échangeable,
le récipient formant l'alimentation (6) en additif liquide étant de préférence, pendant le fonctionnement du système, relié au raccord (5) d'additif liquide au moyen d'une lance (31) d'aspiration,
la lance (31) d'aspiration étant plus préférablement pourvue d'un filtre (32) d'admission et / ou d'un clapet anti-retour (33) et / ou d'au moins un capteur (34) de niveau de liquide relié ou susceptible d'être relié à l'unité (25) de commande.

11. Système de dosage selon l'une quelconque des revendications précédentes, **caractérisé**
**en ce qu'**un boîtier (35) est installé de façon à renfermer le système de dosage entier, de préférence à l'exception de la lance (31) d'aspiration et des éléments (34) de commande associés (s'ils existent), de sorte que le système de dosage peut être manipulé d'un seul tenant.
